# EUROPEAN PATENT SPECIFICATION

(11) **EP 0 524 669 B1**
(45) Date of publication and mention of the grant of the patent: **10.01.2001**
(21) Application number: 92201736.3
(22) Date of filing: 15.06.1992
(51) Int. Cl.: H04Q 11/04, H04M 11/06

(54) **Digital communication system with programming information by way of the B channel**
Digitales Kommunikationssystem mit Programmierungsinformation über den B-Kanal
Système de communication numérique transmettant l'information de programmation par le canal B

(30) Priority: 21.06.1991 EP 91201592
(43) Date of publication of application: 27.01.1993
(73) Proprietor: Koninklijke Philips Electronics N.V., 5621 BA Eindhoven (NL)
(72) Inventor: Hesdahl, Piet Bernard, NL-5656 AA Eindhoven (NL); Klik, Cornelis Machiel, NL-5656 AA Eindhoven (NL)
(74) Representative: Mak, Theodorus Nicolaas

(56) References cited:
- EP-A- 0 355 714
- DE-A- 4 207 126
- NACHRICHTEN ELEKTRONIK UND TELEMATIK, vol. 45, no. 5, 1 May 1991, pages 203-206, XP000230082 CONRAD P: "ZWEI KANAELE - DOPPELTER NUTZEN"
- IEEE NETWORK: THE MAGAZINE OF COMPUTER COMMUNICATIONS, vol. 3, no. 6, 1 September 1989, pages 44-48, 54, XP000074734 LASSERS H: "ISDN TERMINAL PORTABILITY IN THE RBOC NETWORKS"
- PHILIPS TELECOMMUNICATION REVIEW, vol. 48, no. 3, 1 September 1990, pages 2-10, XP000168030 HESDAHL P B ET AL: "DIGITAL ISDN TERMINAL DEVELOPMENT"

## Description

The invention relates to a digital communication system, for example ISDN or ISPABX, comprising at least one exchange and at least one telephone terminal, the exchange communicating with the telephone terminal by way of at least a D channel and a B channel.

Such a system is known from the article "Digital ISDN terminal Development" by P.B. Hesdahl and S. van der Velde in PTR Philips Telecommunication and data Systems Review, September 1990, No. 3, pp. 2-10. In digital communication systems such as ISDN (Integrated Services Digital Networks) and ISPABX (Integrated Services Private Automatic Exchanges), the connected telephone terminals are customarily programmed from the exchange. In that case the user need not program the telephone terminal himself. A simple example of this relates to a telephone terminal comprising a display device on which the name of the calling person is displayed before the telephone connection itself is established. Together with the detection signals the exchange thereto sends the telephone number and the name of the calling person to the called person by way of the D channel. The speech signals are then led over the B channel.

Needless to observe that also different type of programming information may be applied to the user by the exchange. For example, the exchange may define which user facilities are assigned to each user. The exchange may also remotely program various facilities such as names, numbers, etc. under function keys of the keyboard in the telephone terminal. Even remote adjustment of the baud rate, parity and the number of stop bits of a data port in the telephone terminal is feasible in this manner. A disadvantage of such a system is that such programming information is to correspond to the type of exchange used because signal transmission by way of the D channel depends on the type of exchange used. In addition, the load of the exchange is increased according as the programming information becomes more extensive.

It is an object of the invention to obviate these drawbacks.

For this purpose, the communication system according to the invention is characterized, in that that a service station is provided connected to the exchange, the digital communication system comprises means for transmitting programming information available in the service station to the telephone terminal over the B channel, and in that the telephone terminal is arranged for storing the programming information in its processor.

Advantages of the invention are that the sending of programming information no longer depends on the type of exchange used and that the exchange no longer needs to have a large capacity. Furthermore, the speed at which the programming information is transmitted may, in essence, be increased, because the capacity of the B channel is generally larger than that of the D channel.

It is observed that the document "Zwei Kanäle - doppelter Nutzen" by Peter Conrad in NET Nachrichten Elektronik und Telematik, May 1991, No. 5 pp. 203-206 discloses a system in which software is automatically downloaded from a server to a plurality of PC's via the telephone network. In this document, it is not disclosed to send programming information to a telephone terminal and to use a dedicated server for that instead of the exchange in order to reduce the load of the exchange.

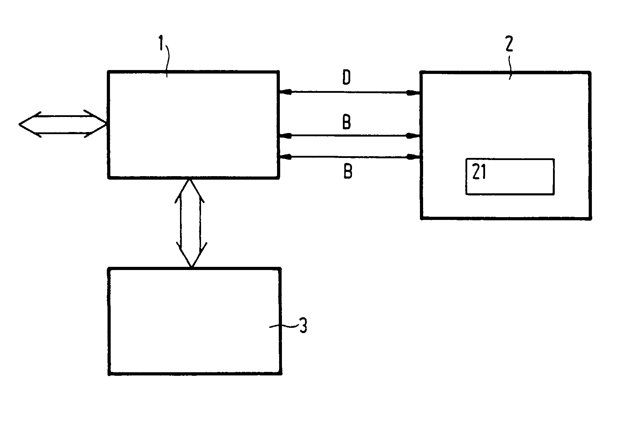

The invention will be further explained hereinafter with reference to the drawing Figure showing a communication system according to the invention. The communication system according to the invention comprises an exchange 1, one or a plurality of telephone terminals 2 and a service station 3. Each telephone terminal 2 is connected in known fashion to the exchange 1 by way of a D channel for detection/service signals and by way of two B channels for speech and/or data signals. The D channel customarily has a capacity of 16 Kbit/s and each B channel 64 Kbit/s.

The system according to the present invention is arranged, so that the programming information for the telephone terminal 2, which information is stored in the service station 3, is transmitted to the telephone terminal 2 by the B channel. This may basically be effected in two ways.

In the first embodiment of the system the (micro)processor 21 installed in the telephone terminal 2 has stored the telephone number (DNR directory number) of the service station 3. The processor 21 independently sends out a call to the service station for gaining access to the information stored therein. Once a connection between the telephone terminal and the service station has been established, the service station sends the desired programming information by the B channel along the exchange. The connection then relates to a so-called end to end protocol and does not load the capacity of the exchange.

In the case where the telephone terminal relates to a telephone set comprising a processor and a picture screen, the desired programming information may be formed by a name belonging to a specific telephone number. The exchange sends by the D channel only the telephone number of the person who calls the telephone terminal. The processor searches in its memory the name belonging to that number and displays this name on the picture screen before the receiver is lifted off the hook and the connection is established. If the memory does not yet contain this name, the processor (afterwards) independently calls the service station *via* the exchange in order to obtain as yet the desired combination of name and telephone number *via* the B channel.

For avoiding a new telephone terminal, whose processor knows only few name-number combinations, independently sending out a call to the service station subsequent to each call and for avoiding the exchange being overloaded at peak hours, calls from the telephone terminal may be bundled. It is also possible to program a telephone terminal in such a way that only at night, when the exchange is loaded to a minor degree, calls to the service station are made by the telephone terminal.

In a second embodiment of the system not the telephone terminal places a call but the service station does. The service station then consecutively calls all the telephone terminals connected to the exchange and supplies them with the information desired by them. In this case it is essential that each processor in the telephone terminals should have stored in its memory the telephone number of the service station and can thus detect that the service station is calling. The processor then avoids a speech or data call being detected and leads the data to the processor itself by the B channel, if so required, by adapting the baud rate.

In the case of above example of combinations of names and telephone numbers, a service station may thus update the telephone lists desired by the various telephone terminals.

In another example an operator at the service station may remote-transmit telephone terminal setting data by way of the B channel. In this manner the setting of various telephone terminals may be performed from one central location, whereas each telephone terminal receives its own specific setting data. The operator concerned may perform the setting activities *via* an ISPABX system within a company but also *via* an ISDN system to which large groups of users are connected.

## Claims

1. Digital communication system comprising at least one exchange and at least one telephone terminal comprising a processor (21), the exchange being arranged for communicating with the telephone terminal by way of at least a D channel and a B channel, the B channel having a larger bandwidth than the D channel, characterized in that a service station (3) is provided connected to the exchange (1), the digital communication system comprises means for transmitting programming information available in the service station to the telephone terminal over the B channel, and in that the telephone terminal is arranged for storing the programming information in its processor (21).

2. Digital communication system as claimed in Claim 1, characterized in that the processor (21) is arranged for automatically calling the service station (3) for requesting programming information from the service station.

3. Digital communication system as claimed in Claim 2, characterized in that the processor (21) is arranged for bundling various requests for programming information and sends them to the service station (3) by means of a single telephone call.

4. Digital communication system as claimed in Claim 2 or 3, characterized in that the processor (21) is arranged for sending out requests for programming information at predetermined instants when the system has a small load.

5. Digital communication system as claimed in Claim 1, characterized in that the service station (3) is arranged for calling each telephone terminal (2) for sending specific programming information to each telephone terminal *via* the B channel.

6. Digital communication system as claimed in Claim 5, characterized in that each telephone terminal (2) is arranged for recognizing any call from the service station (3).

7. Digital communication system as claimed in Claim 6, characterized in that the telephone terminal is arranged for leading the programming information to the processor (21) *via* the B channel without detecting any speech or data call.

8. Digital communication system as claimed in Claim 7, characterized in that the telephone terminal is arranged for adapting the data in the B channel are led to the processor (21) by way of an adaptation of the baud rate.

9. Digital communication system as claimed in one of the Claims 5 to 8, characterized in that the service station (3) comprises means so that a service station operator can adjust each telephone terminal (2) by adjusting data over the B channel along the exchange.

## Patentansprüche

1. Digitales Kommunikationssystem mit wenigstens einer Zentrale und wenigstens einer Telephonendstelle mit einem Prozessor (21), wobei die Zentrale vorgesehen ist zum Kommunizieren mit der Telephonendstelle über wenigstens einen D-Kanal und einen B-Kanal, wobei der B-Kanal eine größere Bandbreite hat als der D-Kanal, dadurch gekennzeichnet, dass eine Servicestelle (3) vorgesehen ist, die mit der Zentrale (1) verbunden ist, dass das digitale Kommunikationssystem Mittel aufweist zum Übertragen von Programmierungsinformation, die in der Servicestelle verfügbar ist, zu der Telephonendstelle über den B-Kanal, und dass die Telephonendstelle vorgesehen ist zum Speichern der Programmierungsinformation in dem Prozessor (21).

2. Digitales Kommunikationssystem nach Anspruch 1, dadurch gekennzeichnet, dass der Prozessor (21) vorgesehen ist zum automatischen Anrufen der Servicestelle (3) zum Beantragen von Programmierungsinformation aus der Servicestelle.

3. Digitales Kommunikationssystem nach Anspruch 2, dadurch gekennzeichnet, dass der Prozessor (21) vorgesehen ist zum Büscheln mehrerer Anträge zur Programmierungsinformation und diese mit Hilfe eines einzigen Anrufs der Servicestelle (3) zusendet.

4. Digitales Kommunikationssystem nach Anspruch 2 oder 3, dadurch gekennzeichnet, dass der Prozessor (21) vorgesehen ist zum Übertragen von Anträgen zur Programmierungsinformation zu vorbestimmten Zeitpunkten, wenn das System eine geringe Belastung hat.

5. Digitales Kommunikationssystem nach Anspruch 1, dadurch gekennzeichnet, dass die Servicestelle (3) vorgesehen ist zum Anrufen jeder Telephonendstelle (2) zum Übertragen spezifischer Programmierungsinformation zu jeder Telephonendstelle über den B-Kanal.

6. Digitales Kommunikationssystem nach Anspruch 5, dadurch gekennzeichnet, dass jede Telephonendstelle (2) vorgesehen ist zum Wiedererkennen jedes Anruft aus der Servicestelle (3).

7. Digitales Kommunikationssystem nach Anspruch 6, dadurch gekennzeichnet, dass die Telephonendstelle vorgesehen ist zum Zuführen der Programmierungsinformation zu dem Prozessor (21) übe den B-Kanal ohne dass ein Sprach- oder Datenanruf detektiert wird.

8. Digitales Kommunikationssystem nach Anspruch 7, dadurch gekennzeichnet, dass die Telephonendstelle vorgesehen ist um Anpassungen durchzuführen, dass die Daten in dem B-Kanal dem Prozessor (21) durch eine Anpassung der Baud-Rate zugeführt werden.

9. Digitales Kommunikationssystem nach einem der Ansprüche 5 bis 8, dadurch gekennzeichnet, dass die Servicestelle (3) Mittel aufweist, so dass eine Bedienende Person der Servicestelle jede Telephonendstelle (21) durch Zuführung von Daten über den B-Kanal mittels der Zentrale einstellen kann.

## Revendications

1. Système de communication numérique comportant au moins un central de commutation et au moins un terminal téléphonique comportant un processeur (21), le central de commutation étant agencé de manière à communiquer avec le terminal téléphonique par l'intermédiaire d'au moins un canal D et un canal B, le canal B ayant une largeur de bande supérieure à celle du canal D, caractérisé en ce qu'il est fourni une station de service (3) connectée au central de commutation (1), en ce que le système de communication numérique comporte des moyens pour transmettre de l'information de programmation disponible dans la station de service au terminal téléphonique à travers le canal B et en ce que le terminal téléphonique est agencé de manière à stocker l'information de programmation dans son processeur (21).

2. Système de communication numérique selon la revendication 1, caractérisé en ce que le processeur (21) est agencé de manière à appeler automatiquement la station de service (3) pour demander de l'information de programmation en provenance de la station de service.

3. Système de communication numérique selon la revendication 2, caractérisé en ce que le processeur (21) est agencé de manière à grouper différentes demandes de l'information de programmation et en ce qu'il les envoie à la station de service (3) au moyen d'un appel téléphonique simple.

4. Système de communication numérique selon la revendication 2 ou 3, caractérisé en ce que le processeur (21) est agencé de manière à envoyer des demandes de l'information de programmation à des instants prédéterminés lorsque le système présente une faible charge.

5. Système de communication numérique selon la revendication 1, caractérisé en ce que la station de service (3) est agencée de manière à appeler chaque terminal téléphonique (2) pour envoyer de l'information de programmation spécifique à chaque terminal téléphonique par l'intermédiaire du canal B.

6. Système de communication selon la revendication 5, caractérisé en ce que chaque terminal téléphonique (2) est agencé de manière à reconnaître un appel quelconque en provenance de la station de service (3).

7. Système de communication numérique selon la revendication 6, caractérisé en ce que le terminal téléphonique est agencé de manière à guider l'information de programmation au processeur (21) par l'intermédiaire du canal B sans ne détecter un appel quelconque de parole ou de données.

8. Système de communication selon la revendication 7, caractérisé en ce que le terminal téléphonique est agencé de manière à adapter les données présentes dans le canal B qui sont guidées au processeur (21) par l'intermédiaire d'une adaptation de la vitesse de transmission en bauds.

9. Système de communication numérique selon l'une quelconque des revendications précédentes 5 à 8, caractérisé en ce que la station de service (3) comporte des moyens, de sorte qu'un opérateur de la station de service peut régler chaque terminal téléphonique (2) en réglant des données à travers le canal B par l'intermédiaire du central de commutation.
